# EUROPEAN PATENT APPLICATION

(11) **EP 3 975 401 A1**
(43) Date of publication of application: **30.03.2022**
(21) Application number: 20382860.3
(22) Date of filing: 29.09.2020
(51) Int. Cl.: H02M 1/32, H02M 3/156, H02M 7/5387, H02M 1/00

(54) **FAULT-TOLERANT DC-AC ELECTRIC POWER CONVERSION DEVICE**

(71) Applicant: Fundació Institut de Recerca en Energia de Catalunya (IREC), 08930 Sant Adrià de Besòs (ES)
(72) Inventor: Trilla Romero, Lluís, 08030 Barcelona (ES); Paradell Sola, Pol, 08160 Montmeló (ES); Dominguez Garcia, Jose Luis, 08870 Sitges (ES); Renaudineau, Hugues Jean-Marie, Valparaiso (CL)
(74) Representative: Curell Suñol S.L.P.

(57) **Abstract**

Fault-tolerant DC-AC electric power conversion device, comprising at least one switch-mode DC-DC converter (1, 2), a switch-mode DC-AC inverter (3) comprising at least one leg (4_{A}, 4_{B}, 4c) with operational switches (S_{AH}, S_{AL}; S_{BH}, S_{BL}; S_{CH}, S_{CL}), a redundant leg (5) with operational switches (S_{RH}, S_{RL}) and a first fault-recovery circuit (6) with at least one reconfiguration switch (T_{A}, T_{B}, T_{C}). The first fault-recovery circuit (6) can be reconfigured, by modifying the state of its reconfiguration switch (T_{A}, T_{B}, T_{C}), so that the redundant leg (5) replaces one leg (4_{A}, 4_{B}, 4_{C}) of the DC-AC inverter (3). At least one of the operational switches (S_{RH}, S_{RL}) of the redundant leg (5) is compatible to replace one operational switch (S₁, S₂) of the DC-DC converter (1, 2). The device further comprises a second fault-recovery circuit (7) with at least one reconfiguration switch (T₁, T₂), which can be reconfigured, by modifying the state of its reconfiguration switch (T₁, T₂), so that the compatible operational switch (S_{RL}) of the redundant leg (5) replaces the operational switch (S₁, S₂) of the DC-DC converter (1, 2).

## Description

### Field of the invention

The invention is comprised in the field of electrical power conversion devices, for converting electric power between direct current (DC) and alternating current (AC).

The invention more specifically relates to a fault-tolerant DC-AC electric power conversion device comprising a switch-mode DC-DC converter, a switch-mode DC-AC inverter, a redundant leg and a fault-recovery circuit, as further described below.

### Prior art

DC-AC electrical power conversion devices are critical units in systems such as , for instance, electric vehicles, energy storage and grid-connected photovoltaic (PV) systems, in which an AC voltage with accurate level, waveform and frequency must be delivered without interruptions from a DC power source. Modern devices are composed of switch-mode DC-DC converters and switch-mode DC-AC inverters with different topologies. These converters and inverters comprise power semiconductor switches such as, for instance, insulated-gate bipolar transistors (IGBT), which can fail and cause a catastrophic failure of the system. For this reason, it is of great importance to design these converters and inverters so that they have a high fault-tolerant capability.

Several fault-tolerant solutions, based on hardware redundancy, reconfiguration circuits and associated control methods, as discussed in [1], are known. They can be classified in four main categories depending on the level in which the redundancy operates: switch level, leg level, module level and system level. Leg level redundant topologies are considered as the optimal compromise between system cost, performance and reliability. They have largely been proposed for three-phase inverters ([2], [3]) as well as single phase DC-AC inverters ([4]). Leg level redundant fault-tolerant operation of DC-DC converters are analysed in [5] and [6]. Fault detection and identification for both DC-DC and DC-AC converters have been proposed in [7], but no fault-tolerant systems are described.

### Description of the invention

The purpose of the invention is to provide a cost-effective and more compact fault-tolerant DC-AC electric power conversion device.

This is achieved by means of a fault-tolerant DC-AC electric power conversion device comprising:
- at least one switch-mode DC-DC converter comprising at least one operational switch and being adapted for modifying the level of a DC voltage between a first terminal and an intermediate point of said device;
- a switch-mode DC-AC inverter comprising at least one leg, said leg comprising a plurality of operational switches and being adapted for rectifying a voltage between a DC voltage at said intermediate point and an AC voltage at a second terminal of said device;
- a redundant leg comprising a plurality of operational switches, said redundant leg being compatible to replace said at least one leg of said DC-AC inverter;
- a first fault-recovery circuit comprising at least one reconfiguration switch, said first fault-recovery circuit connecting said redundant leg to said DC-AC inverter and being arranged so that it can be reconfigured, by modifying the state of said at least one reconfiguration switch, from a passive configuration in which said redundant leg is functionally disconnected from said DC-AC inverter to an active configuration in which said redundant leg is functionally connected to said DC-AC inverter and replaces said leg of said DC-AC inverter;
   characterised in that:
   - at least one operational switch of said plurality of operational switches of said redundant leg, named compatible operational switch, is compatible to replace said at least one operational switch of said DC-DC converter;
   - and said device further comprises a second fault-recovery circuit comprising at least one reconfiguration switch, said second fault-recovery circuit connecting said redundant leg to said DC-DC converter and being arranged so that it can be reconfigured, by modifying the state of said at least one reconfiguration switch, from a passive configuration in which said compatible operational switch of the redundant leg is functionally disconnected from said DC-DC converter to an active configuration in which said compatible operational switch of the redundant leg is functionally connected to said DC-DC converter and replaces said at least one operational switch of said DC-DC converter.

The expression "said redundant leg being compatible to replace said at least one leg of said DC-AC inverter" must be interpreted in the sense that the technical specifications of the components of said redundant leg are chosen so that said leg of the DC-AC inverter can be replaced by said redundant leg, without this replacement significantly affecting the performance of the device for converting electric power between AC at the first terminal and DC at the second terminal, when said device is working under normal operating conditions. Under said normal operating conditions, the redundant leg is functionally equivalent, although not necessarily identical in its components, to the at least one leg of the DC-AC inverter.

The expression "at least one operational switch of said plurality of operational switches of said redundant leg, named compatible operation switch, is compatible to replace said at least one operational switch of the DC-DC converter" must be interpreted in the sense that the technical specifications of the compatible operational switch of the redundant leg are chosen so that the operational switch of the DC-DC converter can be replaced by said compatible operational switch of the redundant leg, without this replacement significantly affecting the performance of the device for converting electric power between AC at the first terminal and DC at the second terminal, when said device is working under normal operating conditions. Under said normal operating conditions, the compatible operational switch of the redundant leg is functionally equivalent, although not necessarily identical, to the operational switch of the DC-DC converter.

The normal operating conditions are the design conditions of the device for converting electric power between DC at the first terminal and AC at the second terminal.

The scope of the invention is not limited to a particular direction of conversion: it comprises devices designed for converting electric power in one direction from DC at the first terminal to AC at the second terminal, devices designed for converting electric power in an opposite direction from AC at the second terminal to DC at first terminal, as well as bidirectional devices designed for converting electric power in both directions.

The expressions "operational switch" and "reconfiguration switch" are adopted for the sole purpose of respectively distinguishing between, on the one hand, the switches belonging to the DC-DC converter, the DC-AC inverter or the redundant leg, and on the other hand, the switches belonging to the fault-recovery circuits. The operational switches are switches belonging to the DC-DC converter, the DC-AC inverter or the redundant leg. They are designed for permanently switching at high frequencies to carry out a switch-mode rectification of an electric power signal. These operational switches are preferably a power semiconductor switch, for instance an IGBT, with an anti-parallel diode. The reconfiguration switches are switches belonging to the reconfiguration circuits. They are designed for occasionally switching, when a fault is detected, in order to modify the connections between the redundant leg and the DC-DC converter or the DC-AC inverter. These reconfiguration switches are, for instance, bidirectional triode thyristors (TRIAC).

As will be discussed later in the detailed description of embodiments, the invention can be implemented in different topologies. Its main technical advantage consists in that a fault-recovery function is provided for the DC-DC converter by using at least one of the operational switches of the redundant leg, which is selected and used to replace an operation switch of the DC-DC converter in fault. There is no need to incorporate additional redundant operational components to the device. The invention can be implemented, for instance, by modifying a known design of a DC-AC electrical power conversion device in two essential points. The first point consists in selecting the functional specifications of one of the operational switches of the redundant leg and/or the functional specifications of the operational switch of the DC-DC converter so that the first switch is compatible to replace the second switch when the device is working under normal operating conditions. Such selection poses no technical difficulties in most of the cases. The second point consists in providing a second fault-recovery circuit which connects the operational switch of the redundant leg of the DC-AC inverter to the DC-DC converter, and which can be reconfigured through its reconfiguration switches as defined above in order to replace the operational switch of the DC-DC converter by the compatible operational switch of the redundant leg. This is less costly and much more compact compared to providing redundant operational components for each of the DC-DC converter and the legs of the DC-AC inverter.

Some preferred embodiments of the device are intended to convert power between a plurality of DC sources and an AC load, for instance between a plurality of a photovoltaic panel units and an AC grid. In these embodiments the device comprises a plurality of switch-mode DC-DC converters, each of said DC-DC converters comprising at least one operational switch and being adapted for modifying the level of a DC voltage between said first terminal and said intermediate point; wherein said compatible operational switch of said redundant leg is compatible to replace said at least one operational switch of each of said DC-DC converters; said second fault-recovery circuit comprises at least one reconfiguration switch for each of said DC-DC converters and connects said redundant leg to each of said DC-DC converters, said second fault-recovery circuit being arranged so that it can be reconfigured, by modifying the state of said at least one reconfiguration switch, from a passive configuration in which said compatible operational switch of the redundant leg is functionally disconnected from each of said DC-DC converters to an active configuration for each of said DC-DC converters, wherein in each of said active configurations said compatible operational switch of the redundant leg is functionally connected to the corresponding DC-DC converter and replaces said at least one operational switch of said DC-DC converter.

In some preferred embodiments, said at least one leg of said DC-AC inverter and said redundant leg are connected in parallel and each comprises at least two operational switches connected in series, and said second terminal of said device is an intermediate point between said two operational switches of said at least one leg of said DC-AC inverter. This is, for instance, the topology of a simple DC-AC inverter.

Preferably, each of said at least one operational switch of said DC-DC converters, said operational switches of said at least one leg of said DC-AC inverter and said redundant leg is composed of a semiconductor switch and an anti-parallel connected diode.

Preferably, each of said one or several DC-DC converters comprises a leg which is connected in parallel with said at least one leg of said DC-AC inverter and said redundant leg and which comprises an operational switch, composed of a semiconductor switch and an anti-parallel connected diode, and a diode arranged in series with said operational switch; and said second fault-recovery circuit comprises, for each of said one or several DC-DC converters, a string connecting an intermediate point between said two operational switches of said redundant leg to and intermediate point between said operational switch and said diode of said DC-DC converter, said string comprising a reconfiguration switch. As will be seen later in the detailed description of some embodiments, this topology allows to implement the second reconfiguration circuit in a simple manner and with a low number of reconfiguration switches.

In some embodiments, each of said one or several DC-DC converters is a boost converter comprising an inductor, a capacitor and a leg connected in parallel with said at least one leg of said DC-AC inverter and said redundant leg, said leg of said DC-DC converter comprising an operational switch and a diode arranged in series, and said inductor of said DC-DC converter connecting said first terminal to an intermediate point between said operational switch and said diode of said DC-DC converter; and wherein said second fault-recovery circuit comprises, for each of said one or several DC-DC converters, a string comprising a reconfiguration switch, said string connecting an intermediate point between said two operational switches of said redundant leg to said intermediate point between said operational switch and said diode of said DC-DC converter.

In some embodiments, intended to convert electric power in both directions between the first and the second terminal, each of said one or several DC-DC converters is a bidirectional DC-DC converter.

The topologies described above make the device suitable for providing a cost effective and compact fault-tolerant DC-AC electric power conversion device.

In preferred embodiments, the fault-tolerant DC-AC power conversion device according to the invention is provided ready to use and further comprises:
- a control unit;
- control circuits operatively connecting said control unit to said one or several DC-DC converters, said DC-AC inverter, said at least one reconfiguration switch of said first fault-recovery circuit and said at least one reconfiguration switch of said second fault-recovery circuit;
wherein said control unit is configured to carry out the following reconfiguration steps [a] and [b]:
[a]
   [a1] automatically detecting a fault in said at least one operational switch of said at least one leg of said DC-AC inverter and, upon detecting said fault,
   [a2] automatically modifying the state of said at least one reconfiguration switch of said first fault-recovery circuit, so that said first fault-recovery circuit is reconfigured from said passive configuration to said active configuration and said redundant leg replaces the leg of said DC-AC inverter comprising the operational switch in fault;
[b]
   [b1] automatically detecting a fault in said at least one operational switch of said one or several DC-DC converters and, upon detecting said fault,
   [b2] automatically modifying the state of said at least one reconfiguration switch of said second fault-recovery circuit so that said second fault-recovery circuit is reconfigured from said passive configuration to said active configuration and said compatible operational switch of said redundant leg replaces said operational switch of said DC-DC converter in fault.

In the preferred embodiments described above, in which the DC-DC converters are boost converters comprising an inductor, said control unit is configured so that, in said reconfiguration step [b], a fault in said at least one operational switch of said one or several DC-DC converters is automatically detected by carrying out the following steps: the current at said inductor is sampled with a frequency which is a multiple of a switching frequency of said at least one operational switch, and if said sampled value of said current is lower than a threshold value a number of times greater than a predetermined number, it is automatically deduced that said operational switch is in fault. The advantage of this method is that no additional elements are needed, since the current at the inductor is already sampled for operating the boost converter. In addition, fault detection is independent for each boost converter and no localization algorithm is required. This method does not allow a very fast detection of the fault, but this is not a problem in most applications, in particular, when the device is applied for converting power from photovoltaic panel units to an AC grid.

Preferably, said control unit comprises a microcontroller and a computer-readable medium containing instructions which, when executed by said microcontroller, cause said microcontroller to carry out said reconfiguration steps [a] and [b].

The method for reconfiguring a fault-tolerant DC-AC power conversion device by carrying out the reconfiguration steps [a] and [b] described above is also part of the invention.

The invention also comprises other features illustrated in the detailed description of embodiments of the invention and in the attached drawings.

### Brief description of the drawings

The advantages and features of the invention can be seen from the following description in which, with a non-limiting character with respect to the scope of the main claim, preferred embodiments of the device according to the invention are described in reference to the drawings.
Fig. 1 is a schematic circuit diagram of a fist embodiment of a fault-tolerant DC-AC electric power conversion device according to the invention, comprising two boost DC-DC converters and a three-phase DC-AC inverter.
Figs. 2 and 3 respectively show the evolution of AC currents (Fig. 2) and DC voltage (Fig. 3) in the first embodiment for a simulated open circuit fault in the upper operational switch of one of the legs of the DC-AC inverter.
Figs. 4 and 5 respectively show the evolution of AC currents (Fig. 4) and DC voltage (Fig. 5) in the first embodiment for a simulated open circuit fault in the lower operational switch of another of the legs of the DC-AC inverter.
Figs. 6 and 7 respectively show the evolution of AC currents (Fig. 6) and DC voltage (Fig. 7) in the first embodiment for a simulated open circuit fault in the operational switch of one of the boost DC-DC converters.
Fig. 8 is a schematic circuit diagram of a second embodiment of a fault-tolerant DC-AC electric power conversion device according to the invention, comprising a bidirectional DC-DC converter and a three-phase DC-AC inverter.
Fig. 9 is a schematic circuit diagram of a third embodiment of a fault-tolerant DC-AC electric power conversion device according to the invention, comprising a magnetic component-free DC-DC converter and a three-phase DC-AC inverter.

### Detailed description of embodiments of the invention

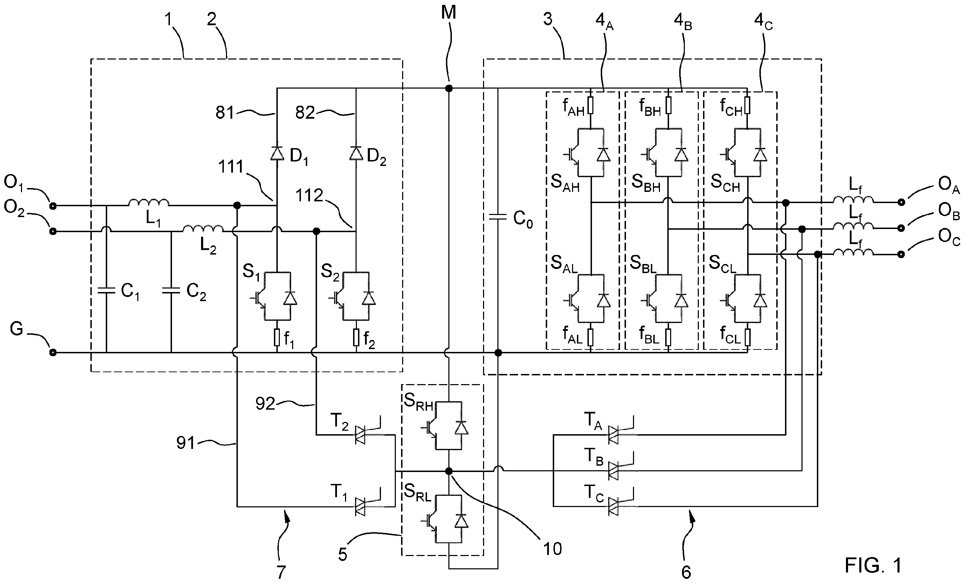

Fig. 1 shows a schematic circuit diagram of a fist embodiment of a fault-tolerant DC-AC electric power conversion device according to the invention. This embodiment is suitable, for instance, for converting power from solar photovoltaic panel units to an AC grid. The device comprises two switch-mode DC-DC converters 1, 2 connected in parallel and a switch-mode three-phase DC-AC inverter 3. Each of the two DC-DC converters 1, 2 is adapted for increasing the level of a DC voltage between a first terminal O₁; O₂ and an intermediate point M of the device. Each of the first terminals O₁, O₂ can be connected, for instance, to a string comprising a plurality of photovoltaic panels. The DC-AC inverter 3 is adapted for rectifying a voltage between the increased DC voltage at the intermediate point M and an AC voltage at three second terminals O_{A}, O_{B}, Oc of the device. The three AC voltages at said second terminals O_{A}, O_{B}, Oc are phase-delayed and form a three-phase voltage for an AC grid.

The DC-AC inverter 3 comprises three legs 4_{A}, 4_{B}, 4_{C} connected in parallel, each comprising two operational switches connected in series S_{AH}, S_{AL}; S_{BH}, S_{BL}; S_{CH}, S_{CL}. Each of the three second terminals O_{A}, O_{B}, O_{C} of the device is connected to an intermediate point between the two operational switches S_{AH}, S_{AL}; S_{BH}, S_{BL}; S_{CH}, S_{CL} of each leg 4_{A}, 4_{B}, 4_{C} of the DC-AC inverter 3.

The DC-DC converters 1, 2 are boost converters each comprising an inductor L₁, L₂, a capacitor C₁, C₂ and a leg 81, 82 connected in parallel with the three legs 4_{A}, 4_{B}, 4_{C} of the DC-AC inverter 3. Each of these legs 81, 82 of the DC-DC converter 1, 2 comprises an operational switch S₁, S₂ and a diode D₁, D₂ arranged in series. Each inductor L₁, L₂ connects each first terminal O₁, O₂ to an intermediate point 111, 112 between the operational switch S₁, S₂ and the diode D₁, D₂ of the DC-DC converter 1, 2. Each capacitor C₁, C₂ connects each first terminal O₁, O₂ to a common zero terminal G.

A redundant leg 5 comprising two operational switches S_{RH}, S_{RL} connected in series is connected in parallel with each of the three legs 4_{A}, 4_{B}, 4_{C} of the DC-AC inverter 3. The redundant leg 5 is compatible to replace any one of the three legs 4_{A}, 4_{B}, 4_{C} of the DC-AC inverter 3. In addition, at least one of the operational switches S_{RH}, S_{RL} of the redundant leg 5, named compatible operational switch, is compatible to replace the operational switch S₁, S₂ of any one of the two DC-DC converters 1, 2. In the topology shown in Fig. 1, the compatible operational switch is the lower switch S_{RL} of the redundant leg 5.

The device comprises a first fault-recovery circuit 6 connecting the redundant leg 5 to the DC-AC inverter 3. The first fault-recovery circuit 6 comprises three reconfiguration switches T_{A}, T_{B}, Tc. Each reconfiguration switch T_{A}, T_{B}, T_{C} connects each of the second terminals O_{A}, O_{B}, O_{C} to an intermediate point 10 between the two operational switches S_{RH}, S_{RL} of the redundant leg 5.

As will be seen later, by modifying the state of these reconfiguration switches T_{A}, T_{B}, T_{C}, the first fault-recovery circuit 6 is reconfigured from a passive configuration, in which the redundant leg 5 is functionally disconnected from the DC-AC inverter 3, to any one of the three possible active configurations. In each of these active configurations, the redundant leg 5 is functionally connected to said DC-AC inverter 3 and respectively replaces one of its three legs 4_{A}, 4_{B}, 4_{C}.

The device further comprises a second fault-recovery circuit 7 connecting the redundant leg 5 to each of the two DC-DC converters 1, 2. The second fault-recovery circuit 7 comprises one reconfiguration switch T₁, T₂ for each of the two DC-DC converters 1, 2. As will be seen later, by modifying the state of these reconfiguration switches T₁, T₂, the second fault-recovery circuit 7 is reconfigured from a passive configuration, in which the compatible operational switch S_{RL} of the redundant leg 5 is functionally disconnected from each of the two DC-DC converters 1, 2, to an active configuration for each of said two DC-DC converters 1, 2. In each of said active configurations, the compatible operational switch S_{RL} of the redundant leg 5 is functionally connected to the corresponding DC-DC converter 1, 2 and replaces its operational switch S₁, S₂. The second fault-recovery circuit 7 comprises, for each of said the two DC-DC converters 1, 2, a string 91, 92 comprising the reconfiguration switch T₁, T₂. Each string 91, 92 connects the intermediate point 10 between the two operational switches S_{RH}, S_{RL} of the redundant leg 5 to the intermediate point 111, 112 between the operational switch S₁, S₂ and the diode D₁, D₂ of each DC-DC converter 1, 2.

Preferably, each of the operational switches S₁, S₂ of the DC-DC converters 1, 2, the operational switches S_{AH}, S_{AL}, S_{BH}, S_{BL}, S_{CH}, S_{CL} of the three legs 4_{A}, 4_{B}, 4_{C} of the DC-AC inverter 3 and the operational switches of the redundant leg 5 is composed of a semiconductor switch and an anti-parallel connected diode.

In the example of Fig. 1, the semiconductor switch of all the operational switches S_{AH}, S_{AL}, S_{BH}, S_{BL}, S_{CH}, S_{CL}, S₁, S₂ is an IGBT and all the configuration switches T_{A}, T_{B}, T_{C}, T₁, T₂ are TRIACs.

The device preferably comprises a fuse f_{AH}, f_{AL}, f_{BH}, f_{BL}, f_{CH}, f_{CL}, f₁, f₂ connected in series to each operational switch S_{AH}, S_{AL}, S_{BH}, S_{BL}, S_{CH}, S_{CL}, S₁, S₁. If a short-circuit fault occurs in one of the operational switches, the fuse opens the circuit and therefore an open-circuit fault is created. In this manner, only an open-circuit diagnosis is required.

The device further comprises a control unit and control circuits (not shown in the figures for the sake of clarity). The control circuits operatively connect the control unit to the following elements:
- the DC-DC converters 1, 2 and the DC-AC inverter 3 for sampling operation values such as, for instance, current intensity and voltage;
- the reconfiguration switches T_{A}, T_{B}, T_{C} of the first fault-recovery circuit 6 and the reconfiguration switches T₁, T₂ of the second fault-recovery circuit 7 for controlling the configuration of these circuits 6 and 7;
- the operational switches S_{AH}, S_{AL}; S_{BH}, S_{BL}; S_{CH}, S_{CL} of the DC-AC inverter 3 for rectifying the voltage between the increased DC voltage at the intermediate point M and the AC voltage at the second terminals O_{A}, O_{B}, O_{C};
- the operational switches S₁, S₂ of the DC-DC converters 1, 2 for increasing the level of the DC voltage between the first terminals O₁; O₂ and the intermediate point M.

The methods for controlling the operational switches of the DC-DC converters 1, 2 and the DC-AC inverter 3, for respectively increasing the DC voltage and rectifying the increased voltage to a three-phase AC voltage, are known by the skilled person and therefore are not further discussed herein. In order to obtain an accurate voltage level and waveform at the second terminals O_{A}, O_{B}, O_{C}, the operational switches are switched at a high switching frequency according to a determined scheme, as known by the skilled person.

The control unit comprises a microcontroller and a computer-readable medium containing instructions which, when executed by said microcontroller, cause said microcontroller to carry out the following reconfiguration steps [a] and [b]:
[a]
   [a1] automatically detecting a fault in any of the operational switches S_{AH}, S_{AL}, S_{BH}, S_{BL}, S_{CH}, S_{CL} of any of the three legs 4_{A}, 4_{B}, 4_{C} of the DC-AC inverter 3 and, upon detecting said fault,
   [a2] automatically modifying the state of at least one of the reconfiguration switches T_{A}, T_{B}, T_{C} of the first fault-recovery circuit 6, so that said first fault-recovery circuit 6 is reconfigured from the passive configuration to an active configuration and the redundant leg 5 replaces the leg 4_{A}, 4_{B}, 4_{C} of the DC-AC inverter 3 comprising the operational switch S_{AH}, S_{AL}, S_{BH}, S_{BL}, S_{CH}, S_{CL} in fault;
[b]
   [b1] automatically detecting a fault in the operational switch S₁, S₂ of any of the DC-DC converters 1, 2 and, upon detecting said fault,
   [b2] automatically modifying the state of at least one reconfiguration switch T₁, T₂ of the second fault-recovery circuit 7 so that said second fault-recovery circuit 7 is reconfigured from the passive configuration to the active configuration and the compatible operational switch S_{RL} of the redundant leg 5 replaces the operational switch S₁, S₂ of the DC-DC converter 1, 2 in fault.

In this first embodiment, the following method is applied by the control unit in the reconfiguration step [b] for automatically detecting a fault in the operational switch S₁, S₂ of any of the two DC-DC converters 1, 2: the current at the inductor L₁, L₂ of the DC-DC converter 1, 2 is sampled with a frequency which is a multiple of the switching frequency of said operational switch S₁, S₂, and if said sampled value of said current is lower than a threshold value a number of times greater than a predetermined number, it is automatically deduced that said operational switch S₁, S₂ is in fault. The method will be discussed later in more detail.

Table 1 shows, for each operation switch in fault, the state of each reconfiguration switch T_{A}, T_{B}, T_{C}, T₁, T₂, as well as the state of the semiconductor switch IGBT of each operation switch in the active configuration of the each fault-recovery circuit 6, 7. In Table 1: "ON" / "OFF indicates that switch is permanently turned on / off; "PSF1" and "PSF2" indicate that the operational switch of the redundant leg 5 is switching, in replacement of the operational switch S₁ or S₂ in fault, at the switching frequency required for operating the DC-DC converters 1 and 2, respectively; and "PSF3" indicates that the operational switch of the redundant leg 5 is switching, in replacement of the operational switch S_{AH}, S_{AL} , S_{BH}, S_{BL}, S_{CH} or S_{CL} in fault, at the switching frequency required for operating the DC-AC inverter 3.

**Table 1**

| Switch in fault | T_{A} state | T_{B} state | T_{C} state | T₁ state | T₂ state | S_{RL} IGBT state | S_{RH} IGBT state |
|---|---|---|---|---|---|---|---|
| S_{AH} | ON | OFF | OFF | OFF | OFF | PSF3 | PSF3 |
| S_{AL} | ON | OFF | OFF | OFF | OFF | PSF3 | PSF3 |
| S_{BH} | OFF | ON | OFF | OFF | OFF | PSF3 | PSF3 |
| S_{BL} | OFF | ON | OFF | OFF | OFF | PSF3 | PSF3 |
| S_{CH} | OFF | OFF | ON | OFF | OFF | PSF3 | PSF3 |
| S_{CL} | OFF | OFF | ON | OFF | OFF | PSF3 | PSF3 |
| S₁ | OFF | OFF | OFF | ON | OFF | PSF1 | OFF |
| S₂ | OFF | OFF | OFF | OFF | ON | PSF2 | OFF |

The following three examples show a simulation of the behaviour of the device of Fig. 1 for a fault recovery in S_{AH}, S_{BL} and S₁, respectively. The simulations are carried out with the following parameters:

| | |
|---|---|
| DC power at each terminal O₁ and O₂ | 4.2 kW |
| C₁ and C₂ | 500 µF |
| L₁ and L₂ | 5 mH |
| C₀ | 2200 µF |
| L_{f} | 10 mH |
| V_{DC}: DC voltage at intermediate point M | 700 V |
| RMS voltage at the AC grid (terminals O_{A}, O_{B}, O_{C}) | 380 V |
| Frequency of the AC grid (terminals O_{A}, O_{B}, O_{C}) | 50 Hz |

### Example 1 (fault in S_{AH})

In a first simulation, an open-circuit fault is simulated on the upper switch S_{AH} of the leg 4_{A} of the AC-DC inverter 3.

At time t = 0.02 s an open-circuit fault occurs in S_{AH}.

A Park's vector method as proposed in [8] is applied by the control unit for automatically detecting and localising the fault in S_{AH}. This method is known by the skilled person and therefore it is not discussed here. It allows to automatically detect and localise an open circuit fault in any of the operational switches of the DC-AC inverter quickly and accurately. Once the fault has been detected and localised in S_{AH}, the control unit automatically and instantaneously reconfigures the first reconfiguration circuit 6 by turning on the reconfiguration switch T_{A}, as shown in Table 1 for a fault in S_{AH}.

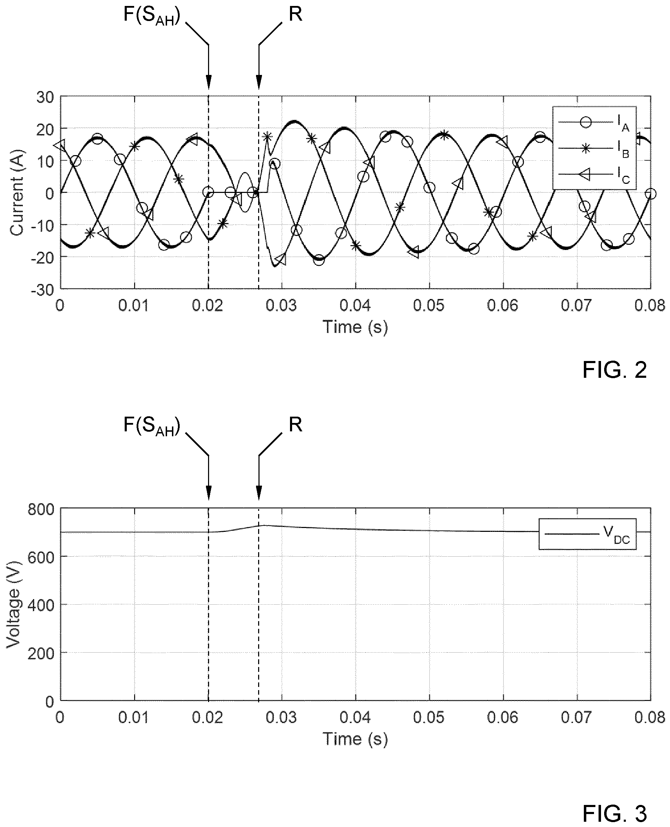

The results of the simulation are shown in Figs. 2 and 3. Fig. 2 shows the evolution of the AC current in each of the second terminals O_{A}, O_{B}, Oc. Fig. 3 shows the evolution of DC voltage at intermediate point M. In these figures, F(S_{AH}) indicates the instant in which the fault in S_{AH} occurs, whereas R indicates the instant in which the first reconfiguration circuit 6 is immediately reconfigured after having detected and localised the fault in S_{AH}. The time between these two instants is 8 ms, which is a value well below the period of the AC current (20 ms). After the automatic reconfiguration, the device quickly comes back to normal operation and the AC current at second terminals O_{A}, O_{B}, O_{C} is properly restored at its reference value and shape.

### Example 2 (fault in S_{BL})

In a second simulation, an open-circuit fault is simulated on the lower switch S_{LB} of the leg 4_{B} of the AC-DC inverter 3.

At time t = 0.02 s an open-circuit fault occurs in S_{LB}.

As in the previous example, a Park's vector method as proposed in [8] is applied by the control unit for automatically detecting and localising the fault in S_{BL}. Once the fault has been detected and located in S_{BL}, the control unit automatically and instantaneously reconfigures the first reconfiguration circuit 6 by turning on the reconfiguration switch T_{B}, as shown in Table 1 for a fault in S_{LB}.

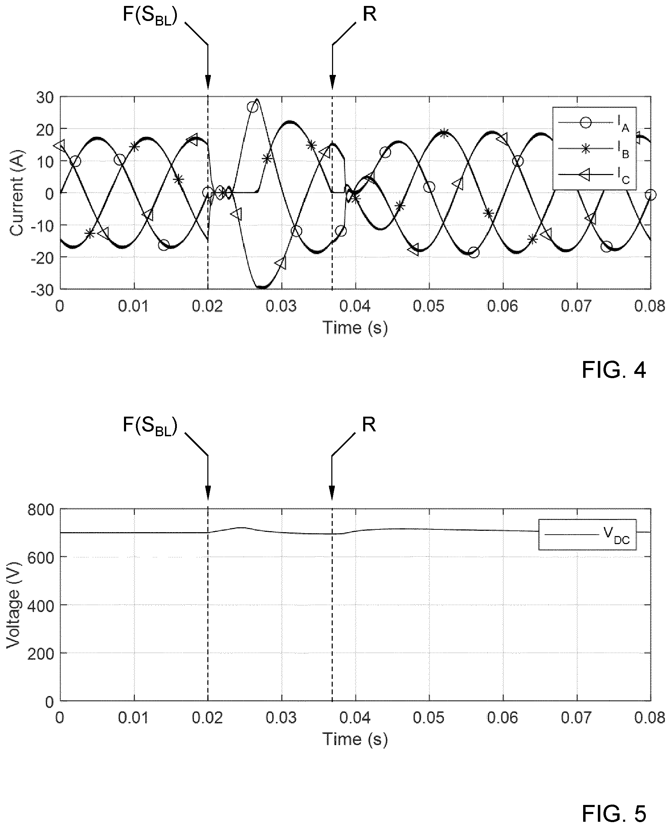

The results are shown in Figs. 4 and 5. Fig. 4 shows the evolution of the AC current in each of the second terminals O_{A}, O_{B}, O_{C}. Fig. 5 shows the evolution of the DC voltage at intermediate point M. In these figures, F(S_{LB}) indicates the instant in which the fault in S_{LB} occurs, whereas R indicates the instant in which the first reconfiguration circuit 6 is immediately reconfigured after having detected and localised the fault in S_{LB}. The time between these two instants is 18.5 ms. It is longer than the time between the two instants shown in Example 1 (fault in S_{AH}), but it is still below the period of the AC current (20 ms). As for Example 1 (fault in S_{AH}), after the automatic reconfiguration the device quickly comes back to normal operation and the AC current at second terminals O_{A}, O_{B}, O_{C} is properly restored at its reference value and shape.

Similar results are obtained when a method equivalent to Examples 1 and 2 is applied for managing a fault in any one of the other operational switches S_{AL}, S_{BH}, S_{CH}, S_{CL} of the DC-AC inverter 3.

### Example 3 (fault in S₁)

In a third simulation, an open-circuit fault is simulated on the switch S₁ of the DC-DC converter 1.

At time t = 0.02 s an open-circuit fault occurs in S₁.

The control unit applies a special method for automatically detecting and localising an open circuit fault in any of the operational switches S₁, S₂ of the DC-DC converters 1, 2. According to this method, only the current at each of the inductors L₁ and L₂ is analysed. Since this current is already sensed for operating the DC-DC converter, no additional elements are needed. The current at each of the inductors L₁ and L₂ is compared to a threshold value i0. For instance, the threshold value i0 is empirically set to 2% of the nominal value of said current at L₁ or L₂. If the current at L₁ or L₂ stays below the threshold value i0 in a number of samples higher than a threshold number NL, the control unit automatically deduces that an open-circuit fault has occurred in S₁ or S₂, respectively. No localization algorithm is required, since the fault is deduced by analysing the current at each inductor L₁, L₂ associated to each switch S₁, S₂. For instance, NL is empirically set to 50, and the current at L₁ and L₂ is sampled at the same frequency than the switching frequency which is used for operating the DC-DC converters 1, 2. For instance, this switching frequency is 20 kHz.

Once the fault has been detected and localised in S₁, the control unit automatically and instantaneously reconfigures the second reconfiguration circuit 7 by turning on the reconfiguration switch T₁, as shown in Table 1 for a fault in S₁.

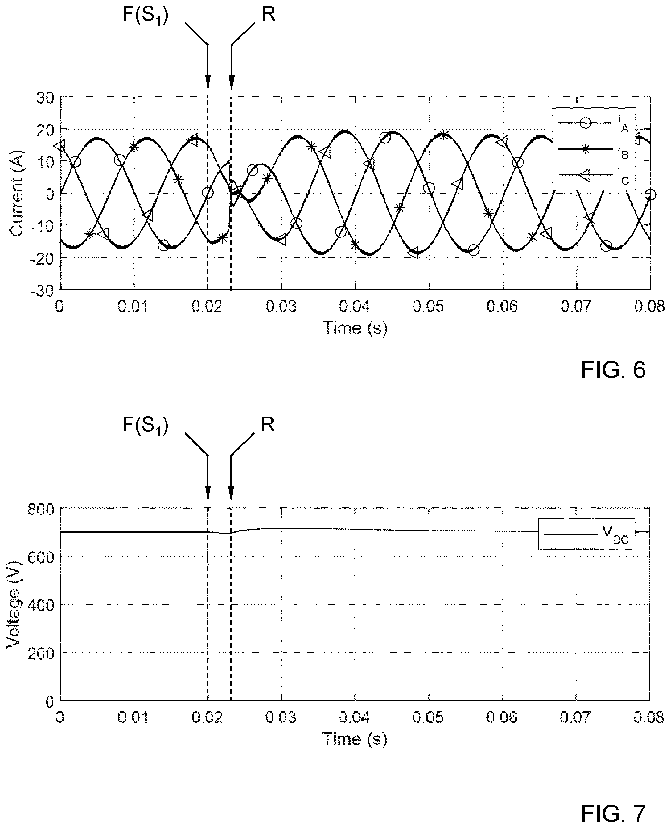

The results are shown in Figs. 6 and 7. Fig. 6 shows the evolution of the AC current in each of the second terminals O_{A}, O_{B}, O_{C}. Fig. 7 shows the evolution of DC voltage at intermediate point M. In these figures, F(S₁) indicates the instant in which the fault in S₁ occurs, whereas R indicates the instant in which the second reconfiguration circuit 7 is immediately reconfigured after having detected and localised the fault in S₁.

As for Examples 1 and 2 (faults in S_{AH} and S_{BL}), after the automatic reconfiguration, the device quickly comes back to normal operation and the AC current at second terminals O_{A}, O_{B}, O_{C} is properly restored at its reference value and shape.

Similar results are obtained when a method equivalent to Example 3 is applied for managing a fault in the operational switch S₂ of the other DC-DC converter 2.

The skilled person will recognise that the circuit shown in Fig. 1 can easily be derived into variants having a different number of DC-DC converters connected in parallel, or a different number of phases in the AC grid.

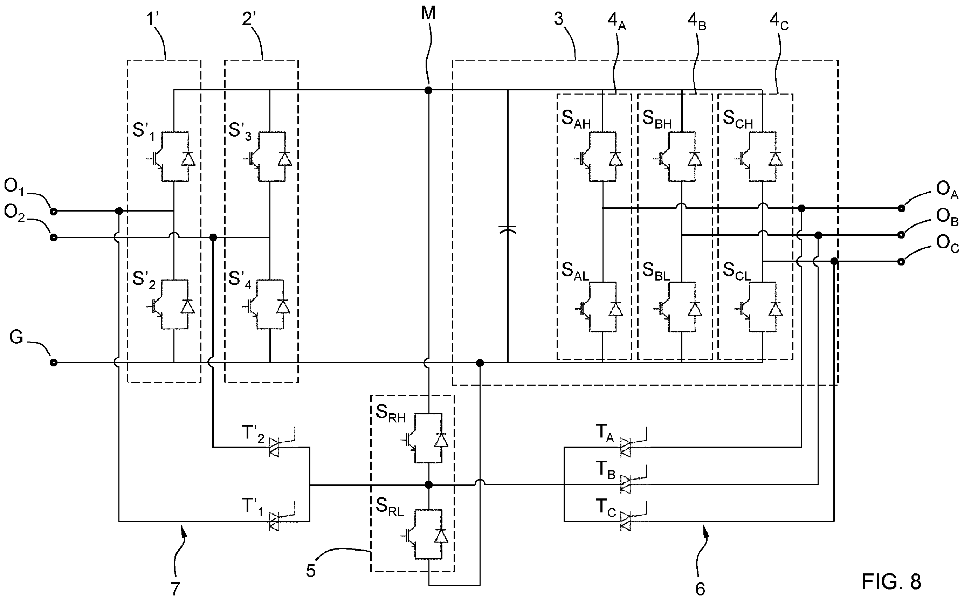

Fig. 8 shows a schematic circuit diagram of a second embodiment of a fault-tolerant DC-AC electric power conversion device according to the invention. The device differs from the first embodiment in that it comprises two bidirectional DC-DC converters 1', 2', each comprising two operational switches, respectively S₁', S₂' and S₃', S₄', connected in series as shown in Fig. 8. The second reconfiguration circuit 7' is composed by two reconfiguration switches T₁', T₂' arranged and connected as shown in Fig. 8. The rest of the circuit, in particular the DC-AC inverter 3 and the first reconfiguration circuit 6, is equivalent to the one of the first embodiment shown in Fig. 1. The same numerical references are used in Figs. 1 and 8 for equivalent elements. The device according to this second embodiment is suitable for converting power in both directions between a three-phase AC voltage at second terminals O_{A}, O_{B}, O_{C} and a DC voltage at first terminals O₁, O₂.

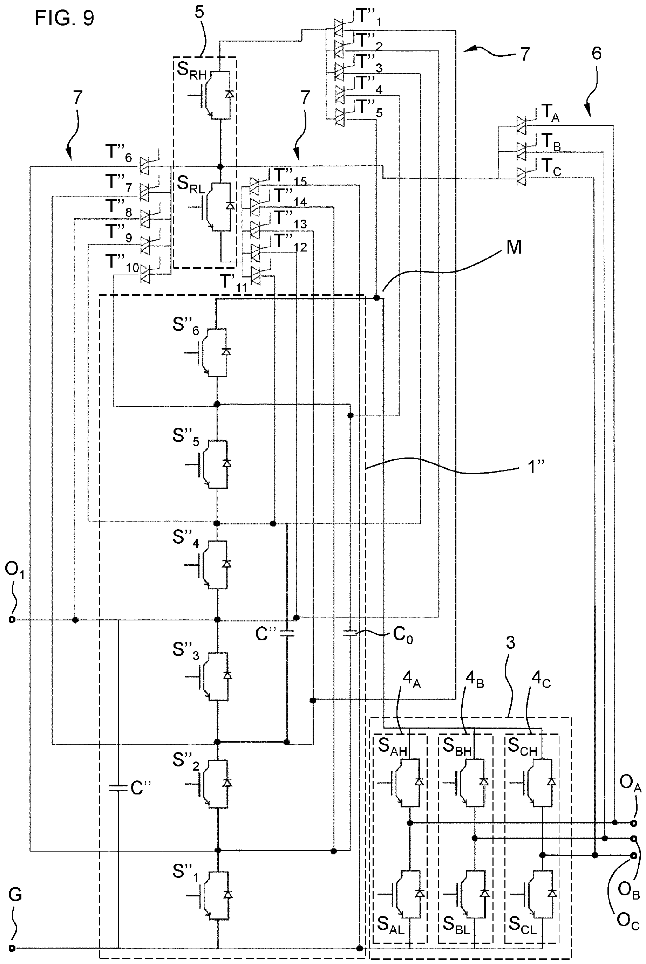

Fig. 9 shows a schematic circuit diagram of a third embodiment of a fault-tolerant DC-AC electric power conversion device according to the invention. The device differs from the first embodiment in that it comprises one magnetic component-free DC-DC converter 1" connected to one first terminal O₁. The DC-DC converter 1" is composed by six operational switches S₁", S₂", S₃", S₄", S₅", S₆" connected in series in a string and two capacitors C" connected in parallel to some of said operational switches as shown in Fig. 9. The second reconfiguration circuit 7" is composed by three groups of reconfiguration switches. The first group is composed by five reconfiguration switches T₁", T₂", T₃", T₄", T₅" arranged and connected as shown in Fig. 9. The second group is composed by five reconfiguration switches T₆", T₇", T₈", Tg", T₁₀" arranged and connected as shown in Fig. 9. The third group is composed by five reconfiguration switches T₁₁", T₁₂", T₁₃", T₁₄", T₁₅" arranged and connected as shown in Fig. 9. The rest of the circuit, in particular the DC-AC inverter 3 and the first reconfiguration circuit 6, is equivalent to the one of the first embodiment shown in Fig. 1. The same numerical references are used in Figs. 1 and 9 for equivalent elements.

### REFERENCES

[1] W. Zhang, D. Xu, P. N. Enjeti, H. Li, J. T. Hawke, and H. S. Krishnamoorthy, "Survey on fault-tolerant techniques for power electronic converters", IEEE Transactions on Power Electronics, vol. 29, no. 12, pp. 6319-6331, December 2014.
[2] S. Karimi, P. Poure, and S. Saadate, "Fast power switch failure detection for fault tolerant voltage source inverters using fpga", IET Power Electronics, vol. 2, no. 4, pp. 346-354, July 2009.
[3] R. R. Errabelli and P. Mutschler, "Fault-tolerant voltage source inverter for permanent magnet drives", IEEE Transactions on Power Electronics, vol. 27, no. 2, pp. 500-508, February 2012.
[4] V. V. S. Pradeep Kumar and B. G. Fernandes, "A fault-tolerant singlephase grid-connected inverter topology with enhanced reliability for solar pv applications," IEEE Journal of Emerging and Selected Topics in Power Electronics, vol. 5, no. 3, pp. 1254-1262, September. 2017.
[5] E. Jamshidpour, P. Poure, and S. Saadate, "Photovoltaic systems reliability improvement by real-time fpga-based switch failure diagnosis and fault-tolerant dc-dc converter", IEEE Transactions on Industrial Electronics, vol. 62, no. 11, pp. 7247-7255, Nov 2015.
[6] D. Guilbert, A. Gaillard, A. N'Diaye, and A. Djerdir, "Power switch failures tolerance and remedial strategies of a 4-leg floating interleaved dc/dc boost converter for photovoltaic/fuel cell applications", Renewable Energy, vol. 90, pp. 14 - 27, 2016.
[7] J. Poon, P. Jain, I. C. Konstantakopoulos, C. Spanos, S. K. Panda, and S. R. Sanders, "Model-based fault detection and identification for switching power converters", IEEE Transactions on Power Electronics, vol. 32, no. 2, pp. 1419-1430, February 2017.
[8] N. M. A. Freire, J. O. Estima, and A. J. Marques Cardoso, "Open circuit fault diagnosis in pmsg drives for wind turbine applications," IEEE Transactions on Industrial Electronics, vol. 60, no. 9, pp. 3957-3967, September 2013, on Electrical Machines Design, Control and Diagnosis (WEMDCD).

## Claims

1. Fault-tolerant DC-AC electric power conversion device, comprising:
- at least one switch-mode DC-DC converter (1, 2) comprising at least one operational switch (S₁, S₂) and being adapted for modifying the level of a DC voltage between a first terminal (O₁, O₂) and an intermediate point (M) of said device;
- a switch-mode DC-AC inverter (3) comprising at least one leg (4_{A}, 4_{B}, 4_{C}), said leg (4_{A}, 4_{B}, 4_{C}) comprising a plurality of operational switches (S_{AH}, S_{AL}; S_{BH}, S_{BL}; S_{CH}, S_{CL}) and being adapted for rectifying a voltage between a DC voltage at said intermediate point (M) and an AC voltage at a second terminal (O_{A}, O_{B}, O_{C}) of said device;
- a redundant leg (5) comprising a plurality of operational switches (S_{RH}, S_{RL}), said redundant leg (5) being compatible to replace said at least one leg (4_{A}, 4_{B}, 4_{C}) of said DC-AC inverter (3);
- a first fault-recovery circuit (6) comprising at least one reconfiguration switch (T_{A}, T_{B}, T_{C}), said first fault-recovery circuit (6) connecting said redundant leg (5) to said DC-AC inverter (3) and being arranged so that it can be reconfigured, by modifying the state of said at least one reconfiguration switch (T_{A}, T_{B}, T_{C}), from a passive configuration in which said redundant leg (5) is functionally disconnected from said DC-AC inverter (3) to an active configuration in which said redundant leg (5) is functionally connected to said DC-AC inverter (3) and replaces said leg (4_{A}, 4_{B}, 4_{C}) of said DC-AC inverter (3);
**characterised in that**:
- at least one operational switch of said plurality of operational switches (S_{RH}, S_{RL}) of said redundant leg (5), named compatible operational switch (S_{RL}), is compatible to replace said at least one operational switch (S₁, S₂) of said DC-DC converter (1, 2);
- and said device further comprises a second fault-recovery circuit (7) comprising at least one reconfiguration switch (T₁, T₂), said second fault-recovery circuit (7) connecting said redundant leg (5) to said DC-DC converter (1, 2) and being arranged so that it can be reconfigured, by modifying the state of said at least one reconfiguration switch (T₁, T₂), from a passive configuration in which said compatible operational switch (S_{RL}) of the redundant leg (5) is functionally disconnected from said DC-DC converter (1, 2) to an active configuration in which said compatible operational switch (S_{RL}) of the redundant leg (5) is functionally connected to said DC-DC converter (1, 2) and replaces said at least one operational switch (S₁, S₂) of said DC-DC converter (1, 2).

2. Fault-tolerant DC-AC power conversion device according to claim 1, comprising a plurality of switch-mode DC-DC converters (1, 2), each of said DC-DC converters (1, 2) comprising at least one operational switch (S₁, S₂) and being adapted for modifying the level of a DC voltage between said first terminal (O₁; O₂) and said intermediate point (M);
wherein said compatible operational switch (S_{RL}) of said redundant leg (5) is compatible to replace said at least one operational switch (S₁, S₂) of each of said DC-DC converters (1, 2); said second fault-recovery circuit (7) comprises at least one reconfiguration switch (T₁, T₂) for each of said DC-DC converters (1, 2) and connects said redundant leg (5) to each of said DC-DC converters (1, 2), said second fault-recovery circuit (7) being arranged so that it can be reconfigured, by modifying the state of said at least one reconfiguration switch (T₁, T₂), from a passive configuration in which said compatible operational switch (S_{RL}) of the redundant leg (5) is functionally disconnected from each of said DC-DC converters (1, 2) to an active configuration for each of said DC-DC converters (1, 2), wherein in each of said active configurations said compatible operational switch (S_{RL}) of the redundant leg (5) is functionally connected to the corresponding DC-DC converter (1, 2) and replaces said at least one operational switch (S₁, S₂) of said DC-DC converter (1, 2).

3. Fault-tolerant DC-AC power conversion device according to anyone of claims 1 or 2, wherein said at least one leg (4_{A}, 4_{B}, 4_{C}) of said DC-AC inverter (3) and said redundant leg (5) are connected in parallel and each comprises at least two operational switches (S_{AH}, S_{AL}; S_{BH}, S_{BL}; S_{CH}, S_{CL}; S_{RH}, S_{RL}) connected in series, and said second terminal (O_{A}, O_{B}, O_{C}) of said device is an intermediate point between said two operational switches (S_{AH}, S_{AL}; S_{BH}, S_{BL}; S_{CH}, S_{CL}) of said at least one leg (4_{A}, 4_{B}, 4_{C}) of said DC-AC inverter (3).

4. Fault-tolerant DC-AC power conversion device according to any of claims 1 to 3, wherein:
- each of said one or several DC-DC converters (1, 2) comprises a leg (81, 82) which is connected in parallel with said at least one leg (4_{A}, 4_{B}, 4_{C}) of said DC-AC inverter (3) and said redundant leg (5) and which comprises an operational switch (S₁, S₂), composed of a semiconductor switch and an anti-parallel connected diode, and a diode (D₁, D₂) arranged in series with said operational switch (S₁, S₂);
- said second fault-recovery circuit (7) comprises, for each of said one or several DC-DC converters (1, 2), a string (91, 92) connecting an intermediate point (10) between said two operational switches (S_{RH}, S_{RL}) of said redundant leg (5) to and intermediate point (111, 112) between said operational switch (S₁, S₂) and said diode (D₁, D₂) of said DC-DC converter (1, 2), said string (91, 92) comprising a reconfiguration switch (T₁, T₂).

5. Fault-tolerant DC-AC power conversion device according to any of claims 1 to 4, wherein each of said one or several DC-DC converters (1, 2) is a boost converter comprising an inductor (L₁, L₂), a capacitor (C₁, C₂) and a leg (81, 82) connected in parallel with said at least one leg (4_{A}, 4_{B}, 4_{C}) of said DC-AC inverter (3) and said redundant leg (5), said leg (81, 82) of said boost converter comprising an operational switch (S₁, S₂) and a diode (D₁, D₂) arranged in series, and said inductor (L₁, L₂) of said DC-DC converter (1, 2) connecting said first terminal (O₁; O₂) to an intermediate point (111, 112) between said operational switch (S₁, S₂) and said diode (D₁, D₂) of said DC-DC converter (1, 2); and wherein said second fault-recovery circuit (7) comprises, for each of said one or several DC-DC converters (1, 2), a string (91, 92) comprising a reconfiguration switch (T₁, T₂), said string (91, 92) connecting an intermediate point (10) between said two operational switches (S_{RH}, S_{RL}) of said redundant leg (5) to said intermediate point (111, 112) between said operational switch (S₁, S₂) and said diode (D₁, D₂) of said DC-DC converter (1, 2).

6. Fault-tolerant DC-AC power conversion device according to any of claims 1 to 5, wherein each of said one or several DC-DC converters (1, 2) is a bidirectional DC-DC converter.

7. Fault-tolerant DC-AC power conversion device according to any of claims 1 to 6, further comprising:
- a control unit;
- control circuits operatively connecting said control unit to said one or several DC-DC converters (1, 2), said DC-AC inverter (3), said at least one reconfiguration switch (T_{A}, T_{B}, T_{C}) of said first fault-recovery circuit (6) and said at least one reconfiguration switch (T₁, T₂) of said second fault-recovery circuit (7);
wherein said control unit is configured to carry out the following reconfiguration steps [a] and [b]:
[a]
[a1] automatically detecting a fault in said at least one operational switch (S_{AH}, S_{AL}, S_{BH}, S_{BL}, S_{CH}, S_{CL}) of said at least one leg (4_{A}, 4_{B}, 4_{C}) of said DC-AC inverter (3) and, upon detecting said fault,
[a2] automatically modifying the state of said at least one reconfiguration switch (T_{A}, T_{B}, T_{C}) of said first fault-recovery circuit (6), so that said first fault-recovery circuit (6) is reconfigured from said passive configuration to said active configuration and said redundant leg (5) replaces the leg (4_{A}, 4_{B}, 4_{C}) of said DC-AC inverter (3) comprising the operational switch (S_{AH}, S_{AL}, S_{BH}, S_{BL}, S_{CH}, S_{CL}) in fault;
[b]
[b1] automatically detecting a fault in said at least one operational switch (S₁, S₂) of said one or several DC-DC converters (1, 2) and, upon detecting said fault,
[b2] automatically modifying the state of said at least one reconfiguration switch (T₁, T₂) of said second fault-recovery circuit (7) so that said second fault-recovery circuit (7) is reconfigured from said passive configuration to said active configuration and said compatible operational switch (S_{RL}) of said redundant leg (5) replaces said operational switch (S₁, S₂) of said DC-DC converter (1, 2) in fault.

8. Fault-tolerant DC-AC power conversion device according to claims 7 and 5, wherein said control unit is configured so that, in said reconfiguration step [b], a fault in said at least one operational switch (S₁, S₂) of said one or several DC-DC converters (1, 2) is automatically detected by carrying out the following steps: the current at said inductor (L₁, L₂) is sampled with a frequency which is a multiple of a switching frequency of said at least one operational switch (S₁, S₂), and if said sampled value of said current is lower than a threshold value a number of times greater than a predetermined number, it is automatically deduced that said operational switch (S₁, S₂) is in fault.

9. Fault-tolerant DC-AC power conversion device according to any of claims 7 or 8, wherein said control unit comprises a microcontroller and a computer-readable medium containing instructions which, when executed by said microcontroller, cause said microcontroller to carry out said reconfiguration steps [a] and [b].
